# EUROPÄISCHE PATENTANMELDUNG

(11) **EP 3 865 340 A1**
(43) Veröffentlichungstag der Anmeldung: **18.08.2021**
(21) Anmeldenummer: 20157729.3
(22) Anmeldetag: 17.02.2020
(51) Int. Cl.: B60N 2/14, B60R 22/48

(54) **PERSONENSICHERUNGSSYSTEM ZUR SICHERUNG VON PERSONEN IN FAHRZEUGEN MIT REVERSIBEL MONTIERTEN FAHRZEUGSITZEN**

(71) Anmelder: AMF-Bruns GmbH & Co. KG, 26689 Apen (DE)
(72) Erfinder: Bruns, Gerit, 26160 Bad Zwischenahn (DE)
(74) Vertreter: Eisenführ Speiser

(57) **Zusammenfassung**

Die Erfindung betrifft ein Personensicherungssystem (1) zur Sicherung von Personen in Fahrzeugen mit reversibel montierten Fahrzeugsitzen, mit einem Sitzdetektor (5), der in die Sitzfläche eines Fahrzeugsitzes (21) einbringbar und dazu eingerichtet ist, die Belegung des Fahrzeugsitzes zu überwachen und ein Signal bereitzustellen, wenn der Fahrzeugsitz belegt ist, mindestens einem Gurtschloss (7), welches mit dem Fahrzeugsitz verbindbar und dazu eingerichtet ist, mit einer Schlosszunge (11) in Eingriff gebracht zu werden, wobei das Gurtschloss (7) ferner einen Gurtschlossdetektor (9) aufweist, der dazu eingerichtet ist, die Position der Schlosszunge (11) zu überwachen und ein Signal breitzustellen, wenn das Gurtschloss (11) mit der Schlosszunge in Eingriff ist, und einer mit dem Fahrzeugsitz verbindbaren Steuerung (3), die signalleitend mit dem Sitzdetektor (5) und dem Gurtschlossdetektor (9) verbunden und dazu eingerichtet ist, die von dem Sitzdetektor (5) und dem Gurtschlossdetektor (9) erfassten Signale zu verarbeiten und ein Alarmsignal bereitzustellen, wenn bei einem belegten Fahrzeugsitz (21) das jeweilige Gurtschloss (7) nicht mit der Schlosszunge (11) in Eingriff ist, einem signalleitend mit der Steuerung (3) verbundenen Alarmmittel zum Erzeugen eines Alarms nach Empfang eines Alarmsignals, wobei die Steuerung (3) einen autonomen, von dem Fahrzeug elektrisch entkoppelten Energiespeicher (17) zum Bereitstellen einer eigenen Stromversorgung für die Steuerung (3), den Sitzdetektor (5), den Gurtschlossdetektor (9) und das Alarmmittel aufweist. Die Erfindung betrifft weiterhin eine Sitzbaugruppe (20) zur reversiblen Kopplung mit einem Fahrzeug (30) mit einem solchen Personensicherungssystem (1) und ein Fahrzeug (30) mit einer solchen Sitzbaugruppe (20) sowie ein Verfahren zur Sicherung von Personen in Fahrzeugen (30).

## Beschreibung

Die Erfindung betrifft ein Personensicherungssystem zur Sicherung von Personen in Fahrzeugen mit reversibel montierten Fahrzeugsitzen. Die Erfindung betrifft ferner eine Sitzbaugruppe zur reversiblen Kopplung mit Fahrzeugen mit einem Personensicherungssystem, ein Fahrzeug mit einer entsprechenden Sitzbaugruppe sowie ein Verfahren zur Sicherung von Personen in Fahrzeugen.

Fahrzeuge mit reversibel montierten Fahrzeugsitzen werden genutzt, um die jeweilige Anordnung der Fahrzeugsitze flexibel auf die aktuellen Anforderungen hinsichtlich der Anzahl zu befördernder Personen und sonstige Güter anzupassen.

Fahrzeuge dieser Art werden beispielsweise von Fahrdiensten zum Transport von Personen mit körperlicher Beeinträchtigung, wie beispielsweise Rollstuhlfahrern, oder Kindern eingesetzt. In Fällen, in denen Rollstuhlfahrer transportiert werden, sind die Fahrzeugsitze bei Bedarf schnell zu demontieren und anschließend erneut zu montieren.

Von diesen speziellen Fahrdiensten wird täglich mehrmals eine wechselnde Anzahl von Personen mit unterschiedlichen Bedürfnissen, beispielsweise bedingt durch deren Mobilität, transportiert. Dafür werden speziell ausgebildete Fahrzeuge mit schnell und reversibel zu montierenden Fahrzeugsitzen verwendet.

Die Sicherung von Personen in Fahrzeugen dieser Art stellt eine besondere Herausforderung dar. Herkömmliche Personensicherungssysteme detektieren zur Personensicherung, ob die Personen auf den belegten Fahrzeugsitzen angeschnallt sind. Diese Personensicherungssysteme kommunizieren dafür mit der zentralen Fahrzeugsteuerung und sind mit der zentralen Stromversorgung durch die Fahrzeugbatterie gekoppelt. Herkömmliche Personensicherungssysteme sind daher aufgrund der regelmäßigen Montage und Demontage der Fahrzeugsitze in Fahrzeugen solcher Fahrdienste nicht verwendbar.

Ferner wird bei herkömmlichen Personensicherungssystemen häufig erst bei eingeschaltetem Motor eine Stromversorgung bereitgestellt und detektiert, ob die Fahrgäste auf den belegten Fahrzeugsitzen angeschnallt sind. Insbesondere im Falle der vorstehend beschriebenen Fahrdienste, sind die Fahrgäste, wie Kinder oder Personen mit körperlicher oder geistiger Beeinträchtigung, zunächst durch eine Begleitperson in dem Fahrzeug anzuschnallen bzw. das ordnungsgemäße Anschnalle zu überprüfen. Die Begleitperson erfährt aber erst bei eingeschaltetem Motor, ob wirklich alle Fahrgäste angeschnallt sind. Weiterhin ist es erforderlich zu wissen, welche Fahrgäste nicht angeschnallt sind, da ansonsten sämtliche Fahrgäste zu überprüfen sind. Der damit verbundene Zeitaufwand wird hierbei als nachteilig empfunden.

Es war somit Aufgabe der Erfindung ein Personensicherungssystem zur Sicherung von Personen in Fahrzeugen mit reversibel montierten Fahrzeugsitzen bereitzustellen, dass die vorstehend beschriebenen Nachteile möglichst weitestgehend überwindet. Insbesondere lag der Erfindung die Aufgabe zugrunde, ein Personensicherungssystem anzugeben, die es bei flexibel und insbesondere auch schnell und reversibel in einem Fahrzeug montierbaren Fahrzeugsitzen ermöglicht, bei einem belegten Fahrzeugsitz zu erkennen, ob der Fahrgast angeschnallt ist und dies auch während der Fahrt weiterhin bleibt.

Die Erfindung löst die zugrundeliegende Aufgabe durch ein Personensicherungssystem gemäß Anspruch 1, eine Sitzbaugruppe gemäß Anspruch 8 und, ein Fahrzeug gemäß Anspruch 9 und ein Verfahren zur Sicherung von Personen in Fahrzeugen gemäß Anspruch 10.

Gemäß einem ersten Aspekt löst die Erfindung die eingangs genannte Aufgabe dadurch, dass sie ein Personensicherungssystem zur Sicherung von Personen in Fahrzeugen mit reversibel montierten Fahrzeugsitzen vorschlägt, mit
- einem Sitzdetektor, der in die Sitzfläche eines Fahrzeugsitzes einbringbar und dazu eingerichtet ist, die Belegung des Fahrzeugsitzes kontinuierlich zu überwachen und ein Signal bereitzustellen, wenn der Fahrzeugsitz belegt ist,
- mindestens einem Gurtschloss, welches mit dem Fahrzeugsitz verbindbar und dazu eingerichtet ist, mit einer Schlosszunge in Eingriff gebracht zu werden,
wobei das Gurtschloss ferner einen Gurtschlossdetektor aufweist, der dazu eingerichtet ist, die Position der Schlosszunge zu überwachen und ein Signal breitzustellen, wenn das Gurtschloss mit der Schlosszunge in Eingriff ist, und
- einer mit dem Fahrzeugsitz verbindbaren Steuerung, die signalleitend mit dem Sitzdetektor und dem Gurtschlossdetektor verbunden und dazu eingerichtet ist, die von dem Sitzdetektor und dem Gurtschlossdetektor erfassten Signale zu verarbeiten und ein Alarmsignal bereitzustellen, wenn bei einem belegten Fahrzeugsitz das jeweilige Gurtschloss nicht mit der Schlosszunge in Eingriff ist,
- einem signalleitend mit der Steuerung verbundenen Alarmmittel zum Erzeugen eines Alarms nach Empfang eines Alarmsignals,
wobei die Steuerung einen autonomen, von dem Fahrzeug elektrisch entkoppelten Energiespeicher zum Bereitstellen einer eigenen Stromversorgung für die Steuerung, den Sitzdetektor, den Gurtschlossdetektor und das Alarmmittel aufweist.

Eine solches Personensicherungssystem ermöglicht eine autonome Personensicherung durch einen autark arbeitenden, von dem Fahrzeug elektrisch unabhängigen, vorzugsweise entkoppelten Energiespeicher zum Bereitstellen einer eigenen Stromversorgung dar. Das Personensicherungssystem kann somit an einem Fahrzeugsitz befestigt bzw. in diesen integriert oder eingebracht werden und somit gemeinsam mit dem Sitz reversibel in dem Fahrzeug montiert werden. Ein aufwändiges Anschließen strom- und signalübertragener Leitungen von der zentralen Steuerung sowie beispielsweise der Fahrzeugbatterie zu dem Personensicherungssystem entfällt somit; der Energiespeicher für die Steuerung des erfindungsgemäßen Personensicherungssystems ist erfindungsgemäß unabhängig von der elektrischen Energieversorgung des Fahrzeugs und unabhängig davon betreibbar. Gleichzeitig wird zuverlässig die Sicherung von Personen in Fahrzeugen gewährleistet, da durch den Sitzdetektor die Sitzbelegung vorzugsweise kontinuierlich oder diskontinuierlich in einstellbaren, vorzugsweise kurzen Zeitintervallen überwacht wird und bei einem belegten Fahrzeugsitz ferner von der Steuerung die Signale des Gurtschlossdetektors verarbeitet bzw. ausgewertet werden, um ein Alarmsignal bereitzustellen, wenn ein Fahrgast nicht angeschnallt ist. Es wird dabei vorzugsweise sowohl vor der Fahrt, als auch während der Fahrt kontinuierlich überwacht, ob alle Fahrgäste angeschnallt sind.

Die Erfinder erkannten weiterhin, dass das erfindungsgemäße Personensicherungssystem vorteilhaft in auch bereits vorhandene Fahrzeugsitze integriert werden kann, um die Insassensicherheit insgesamt zu erhöhen. Das erfindungsgemäße Personensicherungssystem ist vorzugsweise so ausgebildet, dass sie auch nachträglich nach einer Erstausrüstung des Fahrzeugs installiert werden kann.

Durch das mit der Steuerung verbundene Alarmmittel, welches ebenfalls von dem Energiespeicher gespeist werden kann, wird bevorzugt unabhängig davon, ob die Zündung des Fahrzeugs betätigt ist, schon während des Anschnallvorgangs ein Alarmsignal bereitgestellt, wenn einzelne Fahrgäste nicht angeschnallt sind. Die jeweilige verantwortliche Begleitperson, welche die Fahrgäste ggf. anschnallen muss, weiß somit frühzeitig, dass sie die Gurtschlösser nochmals überprüfen muss.

Es ist dabei ebenso im Sinne der Erfindung, dass das Alarmmittel fest an dem Fahrzeug vorinstalliert ist und mittels einer drahtlosen Verbindung signalleitend mit der Steuerung verbunden ist. In einem solchen Fall kann das Alarmmittel durch die Stromversorgung des Fahrzeugs, beispielsweise mittels der Fahrzeugbatterie, gespeist werden.

Das Gurtschloss kann dabei sowohl unmittelbar als auch mittelbar mit dem Fahrzeugsitz verbunden sein. Entscheidend ist hierbei die Kraftübertragung zwischen Fahrzeugsitz und Gurtschloss, welche gemeinsam in dem Fahrzeug reversibel montiert werden.

Eine signalleitende Verbindung zwischen der Steuerung und dem Sitzdetektor und dem Gurtschlossdetektor kann erfindungsgemäß kabelgebunden aber auch mittels kabelloser Übertragung, beispielsweise über Funk, Bluetooth, WLAN oder andere Formen drahtloser Datenübertragung erfolgen.

Ein erfindungsgemäßer Energiespeicher kann ferner sowohl austauschbar, beispielsweise in Form von Batterien, als auch aufladbar in Form von Akkumulatoren bereitgestellt werden. Auch alternative Energiespeicher, gekoppelt mit autonomen Quellen für vorzugsweise elektrische Energie, wie beispielsweise Solarzellen können im Sinne der Erfindung als Energiespeicher dienen.

Gemäß einer bevorzugten Ausführungsform ist die Steuerung dazu eingerichtet, dass Alarmsignal erst mit Ablauf einer vorgegebenen Verzögerungszeit nach dem Erfassen einer Sitzplatzbelegung an das Alarmmittel bereitzustellen. Somit wird der Alarm nach der Sitzbelegung erstmalig nach Ablauf der Verzögerungszeit erzeugt und anschließend im Verlauf der Fahrt, da die Verzögerungszeit bereits abgelaufen ist, sofort erzeugt, wenn ein Fahrgast sich abschnallt. Durch die Verzögerungszeit verbleibt nach dem Hinsetzen des Fahrgastes auf den jeweiligen Fahrzeugsitz zunächst eine vorgegebene Zeitspanne, um sich anzuschnallen oder anschnallen zulassen. Somit wird die Sicherheit während der Fahrt durch Verzicht auf die Verzögerung gewährleistet und vor der Fahrt während sich die Fahrgäste hinsetzen und anschnallen eine ausreichende Zeitspanne bereitgestellt, bevor überhaupt ein Alarm erzeugt werden kann.

Vorzugsweise weist die Steuerung eine Verzögerungsschaltung zum Vorgeben der Verzögerungszeit auf, wobei der Energiespeicher eine Stromversorgung für die Verzögerungsschaltung bereitstellt. Somit ist die Verzögerungszeit mittels der Verzögerungsschaltung vorgebbar, wobei die Verzögerungsschaltung bevorzugt mit einer Benutzerschnittstelle signalleitend verbunden ist. Somit kann durch den Fahrer bzw. die Begleitperson, die die Fahrgäste anschnallen bzw. das Anschnallen überwachen vorgegeben werden, wie viel Zeit zum Anschnallen benötigt wird, sodass das Alarmsignal frühestens nach Ablauf dieser Zeit bereitgestellt und ein Alarm erzeugt werden kann. Dadurch, dass die Verzögerungsschaltung mittels des Energiespeichers mit Strom versorgt wird, ist die Schaltung unabhängig von dem Fahrzeug betreibbar, sodass auch bei ausgeschaltetem Motor eine Verzögerungszeit vorgegeben und nach Ablauf dieser Verzögerungszeit ein Alarmsignal bereitgestellt werden kann.

Gemäß einer bevorzugten Ausführungsform der Erfindung weist die Steuerung das Alarmmittel auf, wobei das Alarmmittel als ein akustisches und/oder optisches Alarmmittel zur Erzeugung eines Alarmtons und/oder eines optischen Alarms ausgebildet ist. Durch einen Alarmton bzw. ein optisches Alarmsignal wird zuverlässig an jedem der Sitze mit einem erfindungsgemäßen Personensicherungssystem angezeigt, dass die betreffende Person nicht angeschnallt ist. Sowohl ein optisches, als auch ein akustisches Alarmsignal ermöglichen dabei eine zuverlässige Alarmerzeugung. Besonders bevorzugt erfolgt der Alarm akustisch, da somit das Alarmmittel auch an schwer ersichtlichen und unzugänglichen Bereichen positioniert bzw. montiert werden kann, ohne das die Alarmfunktion beeinträchtigt wird. Dieser Alarm kann auch auf einige Meter Entfernung noch wahrgenommen werden, sodass Fahrer auch während der Fahrt durch den akustischen Alarm darauf aufmerksam wird, wenn sich ein Fahrgast abschnallt.

Gemäß einer besonders bevorzugten Ausführungsform weist die Steuerung eine Ladestands-Überwachungseinheit auf, die stromleitend mit dem Energiespeicher und signalleitend mit dem Alarmmittel verbunden ist, wobei das Alarmsignal ein erstes Alarmsignal ist und die Ladestands-Überwachungseinheit dazu eingerichtet ist, ein zweites Alarmsignal an das Alarmmittel bereitzustellen, wenn ein vordefinierter Mindest-Ladestand unterschritten wird. Bevorzugt erzeugt das Alarmmittel nach dem Empfang des zweiten Alarmsignals einen zweiten Alarm, der von dem ersten Alarm verschieden ist. Durch die Ladestands-Überwachungseinheit wird der Energiespeicher somit kontinuierlich überwacht und sichergestellt, dass das Personensicherungssystem nicht ungewollt während der Fahrt bei einer vollständigen Entladung des Energiespeichers auffällt. Somit ist der zuverlässige Betrieb des Personensicherungssystems sichergestellt. Bevorzugt ist der Mindest-Ladestand so gewählt, dass eine vordefinierte Reststrecke, bevorzugt in einem Bereich von 500 bis 1000 km, zurückgelegt werden kann, bis der Energiespeicher nach dem Bereitstellen des zweiten Alarmsignals vollständig entladen ist.

Vorzugsweise ist die Steuerung jeweils mittels einer Stromleitung und einer Signalleitung mit dem Sitzdetektor, dem Gurtschlossdetektor und vorzugsweise dem Alarmmittel verbunden. Durch eine kabelgebundene Verbindung der Steuerung mit den übrigen Komponenten des Personensicherungssystems, nämlich dem Sitzdetektor, dem Gurtschlossdetektor und vorzugsweise auch dem Alarmmittel, wird ein robustes und zuverlässiges Personensicherungssystem bereitgestellt. Insbesondere die kabellose Signalübertragung unterliegt Umgebungseinflüssen, welche sich als Störgrößen auswirken. Durch eine kabelgebundene Signalübertragung und Stromversorgung können derartige Störgrößen den sicheren Betrieb dem Personensicherungssystem nicht beeinträchtigen. Somit wird auch bei wiederholter Montage und Demontage eines Fahrzeugsitzes, welcher ein solches Personensicherungssystem aufweist, die Funktionalität des Personensicherungssystems sichergestellt.

Vorzugsweise weist der Gurtschlossdetektor einen Hall-Sensor und einen Magneten, insbesondere Permanentmagneten, auf, wobei der Hall-Sensor dazu eingerichtet ist, eine Lageänderung der Schlosszunge durch Änderung des wirkenden Magnetfelds zu erfassen. Somit ist der Gurtschlossdetektor als Hall-Detektor ausgebildet. Hall-Sensoren bestehen aus möglichst dünnen kristallinen dotierten Halbleiter-Schichten, die seitlich zumeist vier Elektroden besitzen. Durch die zwei gegenüberliegenden Elektroden wird ein Strom eingespeist, wobei durch die beiden orthogonal dazuliegenden Elektroden in dem Gurtschloss die Hall-Spannung abgenommen wird. Wird ein solcher Hall-Sensor von einem senkrecht zur Schicht verlaufenden Magnetfeld umströmt, liefert eine Ausgangspannung, die proportional zum Betrag des Vektorproduktes aus der magnetischen Flussdichte und dem von dem Energiespeicher bereitgestellten Stromes. Das Magnetfeld und damit die magnetische Flussdichte wird durch den Erregermagneten derart beeinflusst, dass sich die Ausgangsspannung verändert und der Gurtschlossdetektor ein Signal bereitgestellt, das anzeigt, dass die Schlosszunge in das jeweilige Gurtschloss eingebracht wurde.

Bevorzugt umfasst das Personensicherungssystem ferner eine Sendeeinheit, die mit der Steuerung signalleitend, insbesondere kabelgebunden mittels einer Signalleitung, verbunden ist, wobei die Sendeeinheit mittels einer kabellosen Signalverbindung mit einer Empfängereinheit, die einem Fahrzeug zugeordnet ist, verbunden und dazu eingerichtet ist, die von der Steuerung bereitgestellten Signale, insbesondere das Alarmsignal, an die Empfängereinheit zu senden. Somit können die von dem Gurtschlossdetektor und dem Sitzplatzdetektor bereitgestellten Signale auch über weitere Distanzen, insbesondere innerhalb eines Fahrzeugs, bereitgestellt werden.

Vorzugsweise ist die Sendeeinheit in die Steuerung integriert. Somit kann die Steuerung selbst die von dem Gurtschlossdetektor und dem Sitzdetektor erfassten Signale einer externen Empfängereinheit und/oder der Alarmeinheit drahtlos bereitstellen.

Weiter bevorzugt ist die Empfängereinheit signalleitend, insbesondere kabelgebunden mittels einer Signalleitung, mit einer dem Fahrzeug zugeordneten Signalverarbeitungseinheit verbunden, wobei die Signalverarbeitungseinheit dazu eingerichtet ist, die von der Sendeeinheit bereitgestellten und von der Empfängereinheit empfangenen Signale zu verarbeiten, um zumindest eine der folgenden Verfahrensschritte durchzuführen:
- Bereitstellen eines ein optisches und/oder akustisches Signals, wenn von der Steuerung ein Alarmsignal bereitgestellt wurde,
- Bereitstellen eines Signals an eine Anzeigeeinheit, wobei das Signal Informationen über die von dem Sitzplatzdetektor und/oder von dem Gurtschlossdetektor erfassten Signale enthält,
- Bereitstellen eines Signals an eine zentrale Fahrzeugsteuerung, wobei das Signal Informationen über die von dem Sitzplatzdetektor und/oder von dem Gurtschlossdetektor erfassten Signale enthält. Somit können die von dem Gurtschlossdetektor und dem Sitzplatzdetektor bereitgestellten Signale zentral gesammelt und dort in optische und/oder akustische Signale umgewandelt werden und zur einfachen und schnellen Übersicht durch entsprechende Begleitpersonen bzw. Fahrzeugführer bereitgestellt werden.

Bevorzugt verarbeitet die Signalverarbeitungseinheit die Signale, die ein oder mehrere Signalempfängereinheiten von einem oder mehreren Sendeeinheiten empfangen. Somit können durch nur eine Signalverarbeitungseinheit, die bevorzugt mit einer Anzeigeeinheit verbunden ist, die Signale von sämtlichen Personensicherungssystemen in einem Fahrzeug weiterverarbeitet und entsprechende optische und/oder akustische Signale bereitgestellt werden.

Die Signalverarbeitungseinheit ist bevorzugt mit einer externen Strom- und Spannungsversorgung/oder einer Fahrzeugbatterie gekoppelt.

Bevorzugt weist die Signalverarbeitungseinheit die Anzeigeeinheit auf und ist dazu eingerichtet, ein optisches und/oder akustisches Signal bereitzustellen.

Die Erfindung wurde vorstehend in einem ersten Aspekt in Bezug auf ein Personensicherungssystem beschrieben.

Die Erfindung betrifft in einem zweiten Aspekt eine Sitzbaugruppe zur reversiblen Kopplung mit einem Fahrzeug. Die Erfindung löst die zugrundeliegende Aufgabe in einem zweiten Aspekt dadurch, dass sie eine Sitzbaugruppe zur reversiblen Kopplung mit einem Fahrzeug vorschlägt, mit einem Personensicherungssystem gemäß dem ersten Aspekt der Erfindung, einem Fahrzeugsitz mit einer Sitzfläche, in die der Sitzdetektor eingebracht ist, und einer Schnellkopplungseinrichtung zur schnellen, reversiblen Kopplung des Fahrzeugsitzes mit dem Fahrzeug, wobei das Gurtschloss mit dem Fahrzeugsitz verbunden und die Steuerung an dem Fahrzeugsitz angeordnet ist.

Eine erfindungsgemäße Sitzbaugruppe mit einem Personensicherungssystem gemäß dem ersten Aspekt der Erfindung macht sich die vorstehend beschriebenen Effekte und Vorteile des Personensicherungssystems zu eigen. Die bevorzugten Ausführungsformen gemäß dem ersten Aspekt sind ebenso bevorzugte Ausführungsformen und Vorteile gemäß dem zweiten Aspekt der Erfindung. Insoweit wird auf die obigen Beschreibungen Bezug genommen.

Die vorstehend in einem ersten Aspekt in Bezug auf ein Personensicherungssystem und in einem zweiten Aspekt in Bezug auf eine Sitzanordnung beschriebene Erfindung betrifft in einem dritten Aspekt ein Fahrzeug, insbesondere Personenkraftwagen zum Transport von Fahrgästen. Die Erfindung löst die zugrundeliegende Aufgabe bei einem solchen Fahrzeug dadurch, dass sie vorschlägt, dass das Fahrzeug eine Sitzbaugruppe gemäß dem zweiten Aspekt der Erfindung, mindestens ein Retraktor-Rückhaltesystem mit einer Schlosszunge, die mit dem korrespondierenden Gurtschloss des Personensicherungssystems in Eingriff bringbar ist, mindestens eine Kopplungsschnittstelle, welche mit der korrespondierenden Schnellkopplungseinrichtung des Fahrzeugsitzes reversibel koppelbar ist, und eine Fahrzeugbatterie zum Bereitstellen einer Stromversorgung für das Fahrzeug aufweist, wobei der Energiespeicher des Personensicherungssystems ein autonome Energiespeicher und von der Fahrzeugbatterie elektrisch entkoppelt.

Das Fahrzeug mit einer Sitzbaugruppe gemäß dem zweiten Aspekt der Erfindung, die ein Personensicherungssystem gemäß dem ersten Aspekt der Erfindung aufweist, macht sich die vorstehenden in Bezug auf die im ersten und zweiten Aspekt beschriebenen Vorteile zu eigen. Die bevorzugten Ausführungsformen gemäß dem ersten Aspekt der Erfindung sind folglich ebenso Vorteile und bevorzugte Ausführungsformen gemäß dem dritten Aspekt der Erfindung und umgekehrt.

Die Erfindung betrifft in einem vierten Aspekt ferner ein Verfahren zur Sicherung von Personen in Fahrzeugen. Die Erfindung löst die zugrundeliegende Aufgabe in einem vierten Aspekt dadurch, dass sie ein Verfahren vorschlägt, welches die Schritte umfasst:
- Bereitstellen einer Sitzbaugruppe, insbesondere einer Sitzbaugruppe gemäß dem zweiten Aspekt der Erfindung, mit einem Fahrzeugsitz, der ein Personensicherungssystem aufweist, mit einem autonomen Energiespeicher als Stromversorgung für eine Steuerung, einem Sitzdetektor, einem Gurtschlossdetektor und einem Alarmmittel,
- reversibles Montieren des Fahrzeugsitzes mit dem Personensicherungssystem in dem Fahrzeug,
- Bereitstellen einer Stromversorgung durch den Energiespeicher für die Steuerung, den Gurtschlossdetektor, den Sitzdetektor und vorzugsweise des Alarmmittels,
- Erfassen der Belegung eines Fahrzeugsitzes mittels eines Sitzdetektors,
- Erfassen eine Schließzustand, in dem das Gurtschloss mit einer Schlosszunge in Eingriff ist, mittels eines Gurtschlossdetektors,
- Verarbeiten der von dem Sitzdetektor und dem Gurtschlossdetektor erfassten Informationen,
- Bereitstellen eines ersten Alarmsignals, wenn bei einem belegten Fahrzeugsitz das zugeordnete Gurtschloss nicht in den Schließzustand gebracht wird,
- Erzeugen eines ersten Alarms nach Empfang des ersten Alarmsignals.

Somit wird gemäß dem vierten Aspekt der Erfindung ein Verfahren zur Sicherung von Personen in Fahrzeugen vorgeschlagen, welches durch Bereitstellen einer Sitzbaugruppe mit einem autonomen Energiespeicher ermöglicht, dass die Belegung eines Fahrzeugsitzes und der Schließzustand des Gurtschlosses unabhängig von der Stromversorgung des Fahrzeugs, beispielsweise durch die Fahrzeugbatterie, sichergestellt wird. Die auf das Bereitstellen der Sitzbaugruppe und das reversible Montieren des Fahrzeugsitzes mit dem Personensicherungssystem können somit unabhängig von dem Betrieb des Fahrzeugs ausgeführt werden.

Bevorzugte Ausführungsformen und Weiterbildungen gemäß dem ersten Aspekt der Erfindung sind ebenso bevorzugte Ausführungsformen und Weiterbildungen gemäß dem zweiten Aspekt und umgekehrt.

Vorzugsweise umfasst das Verfahren ferner die Schritte:
- Prüfen des Ladezustands des Energiespeichers,
- Bereitstellen eines zweiten Alarmsignals, wenn ein vordefinierter Mindest-Ladestand unterschritten wird, und
- Erzeugen eines zweiten Alarms nach Empfang des zweiten Alarmsignals.

Der zweite Alarm ist dabei vorzugsweise von dem ersten Alarm verschieden. Durch eine solche Überprüfung des Ladezustands des Energiespeichers kann im Betrieb die sichere Erfassung der Belegung des Fahrzeugsitzes und des Schließzustands sichergestellt werden, da die dafür verwendeten Detektoren, wie der Sitzdetektor und der Gurtschlossdetektor, zuverlässig mit Energie aus dem Energiespeicher versorgt werden können. Ein solches, in das Verfahren zur Personensicherung integriertes Verfahren zur Überprüfung des Ladezustands erhöht somit die Ausfallsicherheit.

Weiter bevorzugt umfasst das Verfahren den Schritt: Vorgeben einer Verzögerungszeit mittels einer Verzögerungsschaltung des Personensicherungssystems, wobei das erste Alarmsignal erst mit Ablauf der Verzögerungszeit nach dem Erfassen einer Sitzbelegung bereitgestellt und der erste Alarm erzeugt wird. Somit wird durch das Verfahren eine Zeitspanne bereitgestellt, in welche die Fahrzeuginsassen angeschnallt werden können, bevor überhaupt ein Alarmsignal bereitgestellt wird. Andernfalls würde dieses Alarmsignal unmittelbar nach der Belegung des Fahrzeugsitzes bereitgestellt werden und dem Fahrer sowie die Fahrgäste unnötig stören und beeinträchtigen.

Weiter bevorzugt wird in dem Verfahren der erste Alarm sofort erzeugt, wenn nach Ablauf der Verzögerungszeit das Gurtschloss wieder von der Schlosszunge getrennt wird, und weiterhin eine Sitzbelegung erfasst wird. Somit wird während der Fahrt, nachdem erstmalig die Verzögerungszeit abgelaufen ist, ein Alarmsignal sofort erzeugt, wann immer das Gurtschloss von der Schlosszunge getrennt wird. Dadurch wird insbesondere während der Fahrt die Sicherheit erhöht und eine Verzögerung zwischen dem Abschnallen und dem Erzeugen des Alarms während der Fahrt, welche im Falle eines Unfalls zu Personenschäden führen könnte, vermieden.

Das erfindungsgemäße Verfahren umfasst gemäß einem bevorzugten Ausführungsbeispiel ferner die Schritte:
- Austausch oder Aufladen des Energiespeichers,
- Prüfen der Stromversorgung bzw. der Spannungsversorgung,
- Erzeugen eines ersten Alarmsignals, das dazu eingerichtet ist, dass die Stromversorgung bzw. Spannungsversorgung vorhanden ist,
- Prüfen des Gurtschlossdetektors,
- Nochmaliges Erzeugen des ersten Alarmsignals, wenn der Gurtschlossdetektor kein Signal bereitstellt und/oder keinen Eingriff von Gurtschloss und Schlosszunge detektiert, oder
- Erzeugen eines zweiten Alarmsignals und vorzugsweise des zweiten Alarmsignals, wenn der Gurtschlossdetektor ein Signal bereitstellt und/oder einen Eingriff von Gurtschloss und Schlosszunge detektiert,
- Prüfen des Sitzdetektors,
- Nochmaliges Erzeugen des ersten Alarmsignals, wenn der Sitzdetektor kein Signal bereitstellt und/oder keine Sitzplatzbelegung detektiert, oder
- Erzeugen eines zweiten Alarmsignals, wenn der Sitzdetektor ein Signal bereitstellt und/oder eine Sitzbelegung detektiert.

Somit wird ferner auch bei einem Systemneustart bzw. einen Austausch oder eines Aufladens des Energiespeichers die Funktionalität des Personensicherungssystems geprüft und sichergestellt.

Die Erfindung wird nachfolgend unter Bezugnahme auf die beigefügten Figuren und anhand bevorzugter Ausführungsbeispiele näher beschrieben. Hierbei zeigen:
- Figur 1a:: eine schematische Darstellung eines erfindungsgemäßen Personensicherungssystems gemäß einem ersten bevorzugten Ausführungsbeispiel,
- Figur 1b:: eine schematische Darstellung eines erfindungsgemäßen Personensicherungssystems gemäß einem zweiten bevorzugten Ausführungsbeispiel,
- Figur 2:: eine schematische Darstellung einer erfindungsgemäßen Sitzbaugruppe mit einem Personensicherungssystem gemäß Figur 1a,
- Figur 3:: eine schematische Darstellung eines erfindungsgemäßen Fahrzeugs mit einer Sitzbaugruppe gemäß Figur 2,
- Figur 4:: eine schematisches vereinfachtes Fließbild, der von der Steuerung ausgeführten Hauptverfahrensschritte,
- Figur 5:: ein Fließbild von den Verfahrensschritten des erfindungsgemäßen Verfahrens zur Funktionsprüfung,
- Figur 6:: ein Fließbild von Verfahrensschritten des erfindungsgemäßen Verfahrens zur Sicherung von Personen in Fahrzeugen, und
- Figur 7:: ein schematisches Fließbild von Verfahrensschritten des erfindungsgemäßen Verfahrens zur Überprüfung des Ladezustandes.

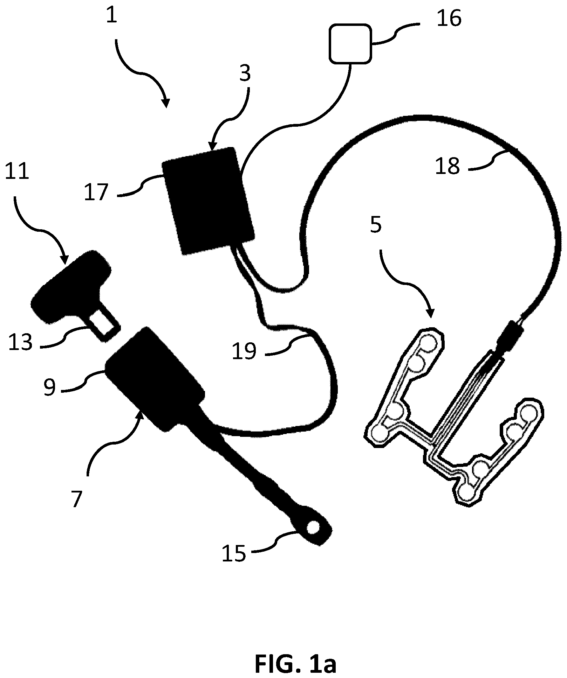

Figur 1a zeigt ein Personensicherungssystem 1 zur Sicherung von Personen in Fahrzeugen mit reversibel montierten Fahrzeugsitzen.

Das Personensicherungssystem 1 weist eine Steuerung 3 auf, die mit einem Sitzdetektor 5 und einem Gurtschloss 7 umfassend einen Gurtschlossdetektor 9 signalleitend verbunden ist.

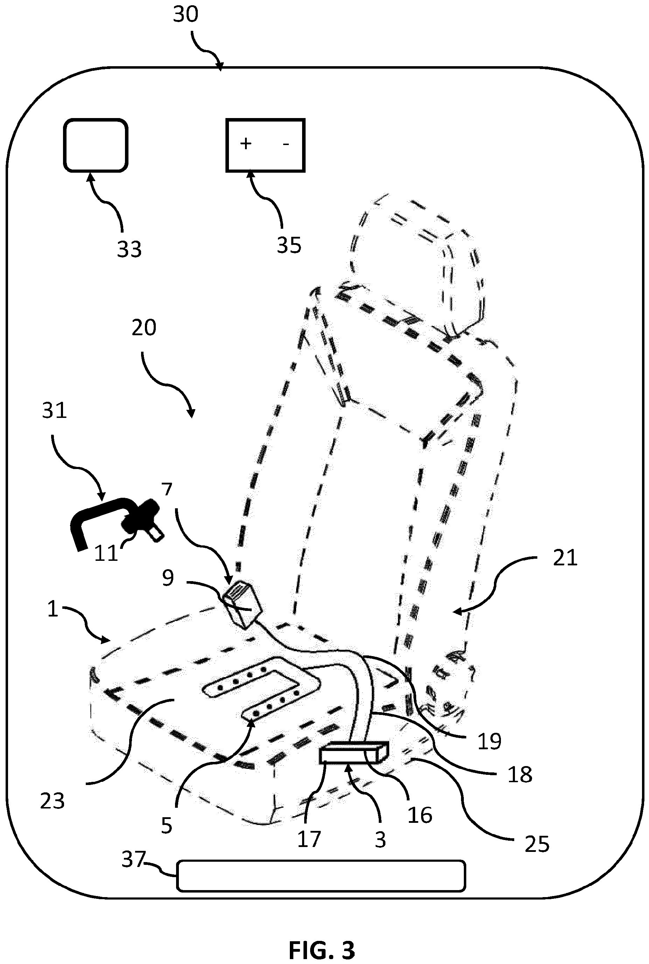

Die Steuerung 3 ist dazu eingerichtet, die von dem Sitzdetektor 5 und dem Gurtschlossdetektor 9 erfassten Signale zu verarbeiten und einem Alarmsignal bereitzustellen. Das Alarmsignal wird bereitgestellt, wenn im verbauten Zustand der Personensicherungssystem 1, in welcher sie an einem reversibel montierten Fahrzeugsitz befestigt ist, die Belegung eines Fahrzeugsitzes durch den Sitzplatzdetektor 5 erfasst wird und ferner der Gurtschlossdetektor 9 erfasst, dass das Gurtschloss 7 nicht mit einer kooperierten Schlosszunge 11 eines Retraktor-Rückhaltesystems (vgl. Figur 3) in Eingriff ist.

Der Gurtschlossdetektor 9 ist bevorzugt ein Hall-Sensor und die Schlosszunge 11 weist einen Erregermagneten 13 auf, der von dem Hall-Sensor 9 erfasst wird, wenn dieser sich in das Magnetfeld des Hall-Sensors 9 bewegt.

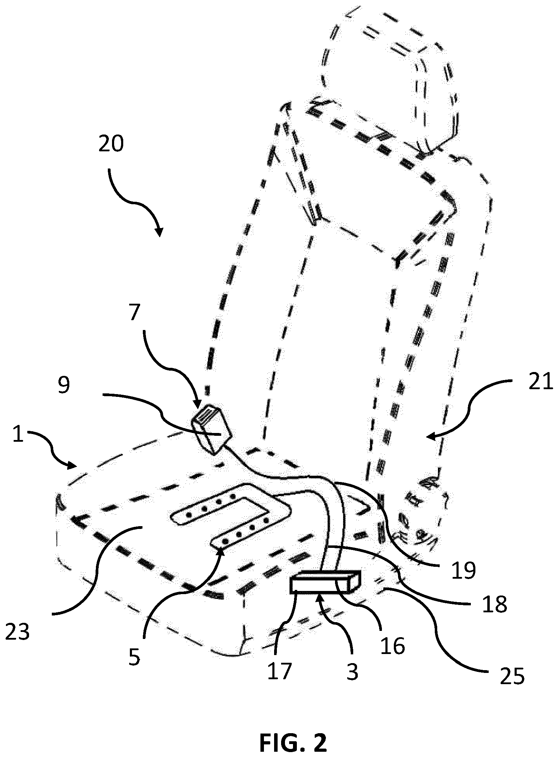

Weiterhin weist das Gurtschloss 7 eine Montageschnittstelle 15 auf, die dazu eingerichtet ist mit einem Fahrzeugsitz 21 (vgl. Figur 2) verbunden zu werden.

Das Personensicherungssystem 1 weist ferner ein Alarmmittel 16 auf, das signalleitend mit der Steuerung 3 verbunden ist und dazu eingerichtet ist, bei Empfang eines Alarmsignals von der Steuerung 3 einen Alarm zu erzeugen.

Die Steuerung 3 weist weiterhin einen autonomen, von dem Fahrzeug elektrisch entkoppelten Energiespeicher 17 zum Bereitstellen einer eigenen Stromversorgung für die Steuerung 3, den Sitzdetektor 5, den Gurtschlossdetektor 9 und vorzugsweise das Alarmmittel 16 auf. Der Energiespeicher 17 ist beispielsweise als Batterie, wiederaufladbarer Akku und gegebenenfalls gekoppelt mit einer autonomen elektrischen Energiequelle in Form beispielsweise einer Solarzelleneinheit.

Es ist dabei ebenso im Sinne der Erfindung, wenn der Energiespeicher 17 nicht unmittelbar Teil der Steuerung 3 ist, aber zumindest mittelbar mit dieser verbunden ist.

Zur signal- und stromleitenden Verbindung ist der Sitzplatzdetektor 5 mit der Steuerung 3 mittels eines ersten Strom- oder Signalkabels 18 verbunden und der Gurtschlossdetektor 9 ist mit der Steuerung 3 mittels eines zweiten Strom- oder Signalkabels 19 verbunden.

Unter einem Strom- oder Signalkabel ist ein Kabel zu verstehen, in welchem entweder zwei Kabel, nämlich ein Stromkabel und ein Signalkabel benachbart zueinander verlaufen, oder in welchem beide Kabel zur Datenverbindung in einer gemeinsamen isolierenden Hülle parallel zueinander verlaufen.

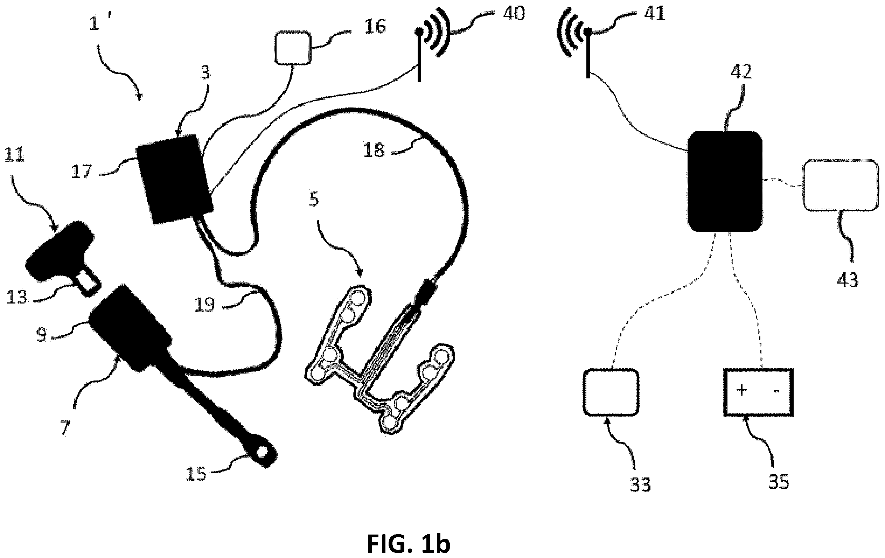

Das Personensicherungssystem 1 gemäß Figur 1b unterscheidet sich von dem Personensicherungssystem 1 gemäß Figur 1a durch eine Sendeeinheit 40, die kabelgebunden mit der Steuerung 3 verbunden ist.

Es ist ebenso im Sinne der Erfindung eine kabellose Signalverbindung zwischen der Steuerung 3 und der Sendeeinheit 40 vorzusehen.

Die Sendeeinheit 40 ist dazu eingerichtet, die von der Steuerung 3 verarbeiteten Signale des Gurtschlossdetektors 9 und des Sitzdetektors 5 und/oder das von der Steuerung 3 bereitgestellte Alarmsignal an eine externe Empfängereinheit 41 zu senden. Das Senden dieser Signale durch die Sendeeinheit 40 an die Empfängereinheit 41 erfolgt dabei bevorzugt kabellos, beispielsweise mittels Funk, WiFi, WLAN, Bluetooth, NFC, ZigBee oder anderen Standards zur drahtlosen Datenübertragung.

Durch die kabellose Signalübertragung zwischen Sendeeinheit 40 und Empfängereinheit 41 können die von der Steuerung 3 verarbeiteten Signale über große Distanzen zur weiteren Verarbeitungen und/oder Auswertung bereitgestellt werden. Die Empfängereinheit 41 ist mittels einer kabelgebundenen Signalleitung mit einer Signalverarbeitungseinheit 42 verbunden.

Es ist ferner ebenso im Sinne der Verbindung zwischen der Empfängereinheit 41 und der Datenverarbeitungseinheit 42 eine Signalübertragung mittels einer kabellosen Signalverbindung vorzusehen.

Die Signalverarbeitungseinheit 42 ist dazu eingerichtet, die von der Empfängereinheit 41 empfangenen Signale weiter zu verarbeiten und aufzubereiten und diese aufbereiteten Signale dann beispielsweise einer Anzeigeeinheit 43 und/oder oder der zentralen Fahrzeugsteuerung 33 bereitzustellen.

Die Signalverarbeitungseinheit 42 ist bevorzugt mit der zentralen Fahrzeugsteuerung 33 eines Fahrzeugs (nicht gezeigt) sowie einer Fahrzeugbatterie 35 des Fahrzeugs verbunden. Somit wird die Strom- und Spannungsversorgung der Signalverarbeitungseinheit 42 von der Fahrzeugbatterie 35 bereitgestellt.

Es ist ferner im Sinne der Erfindung, dass die Signalverarbeitungseinheit 42 in die Anzeigeeinheit 43 integriert ist.

Die Anzeigeeinheit 43 ist dazu eingerichtet, die von der Signalverarbeitungseinheit 42 aufbereiteten Signale zu visualisieren, beziehungsweise sie in optische Signale und/oder akustische Signale umzuwandeln. Die umgewandelten Signale ermöglichen dabei bevorzugt Rückschlüsse auf die von dem Sitzdetektor 5 und dem Gutschlossdetektor 9 erfassten Signale.

Beispielsweise kann die Anzeigeeinheit 43 ein erstes akustisches Signal bereitstellen, wenn der Sitzdetektor 5 eine Sitzbelegung erfasst, ein zweites akustisches Signal bereitstellen, wenn der Gutschlossdetektor 9 die Schlosszunge 11 am Gutschloss erfasst, um ein drittes akustisches Signal bereitzustellen, wenn nach Ablauf einer vordefinierten Verzögerungszeit nur eines der beiden Signale bereitgestellt wird.

Die Anzeigeeinheit 43 kann in Ergänzung zu der Alarmeinheit 16 oder als Alternative zu selbiger eingesetzt werden.

Weiter bevorzugt werden der Anzeigeeinheit 43 durch die Empfängereinheit 41 und die Signalverarbeitungseinheit 42 Signale unterschiedlicher Personensicherungssysteme 1 bereitgestellt. In diesem Fall ist die Anzeigeeinheit 43 dazu eingerichtet, die durch die Signale des Sitzplatzdetektors 5 und des Gurtschlossdetektors 9 definierte Anschnallsituation jedes der Personensicherungssysteme 1' zu überwachen und zu visualisieren beziehungsweise entsprechende optische Signale bereitzustellen.

In alternativen Ausführungsbeispielen kann ebenso vorgesehen sein, dass die Anzeigeeinheit 43 Teil einer zentralen Anzeigeeinheit (nicht gezeigt) des Fahrzeugs ist.

Figur 2 zeigt eine erfindungsgemäße Sitzbaugruppe 20.

Die Sitzbaugruppe 20 umfasst das Personensicherungssystem 1 gemäß Figur 1 und einen Fahrzeugsitz 21 mit einer Sitzfläche 23, in die der Sitzdetektor 5 eingebracht bzw. eingebettet ist.

Der Fahrzeugsitz 21 umfasst ferner eine Schnellkopplungseinrichtung 25 zur schnellen, reversiblen Kopplung des Fahrzeugsitzes 21 mit dem Fahrzeug (vgl. Figur 3). Die Schnellkopplungseinrichtung 25 ist bevorzugt an der Unterseite des Sitzes 21 angeordnet und bevorzugt mit einer korrespondierenden Kopplungsschnittstelle 37 (vgl. Figur 3) an einem Fahrzeugboden in Eingriff bringbar.

Der Fahrzeugsitz 21 weist ferner eine Montageschnittstelle (nicht gezeigt) auf, an der die korrespondierende Montageschnittstelle 15 (vgl. Figur 1) des Gurtschlosses 7 montierbar ist.

Die Strom- oder Signalkabel 18, 19 sind bevorzugt in dem Fahrzeugsitz 21, insbesondere in dessen Sitzpolsterung eingebettet.

Die Steuerung 3 ist an dem Fahrzeugsitz 21 angeordnet und an diesem derart befestigt, dass der Energiespeicher 17 von außen zugänglich ist, um diesen ggf. auszutauschen.

Das Personensicherungssystem 1 ist dabei derart an dem Fahrzeugsitz 21 befestigt, dass diese gemeinsam mit dem Fahrzeugsitz 21 mittels der Schnellkopplungseinrichtung 25 mit einem Fahrzeug gekoppelt bzw. von diesem wieder entkoppelt werden kann.

Figur 3 zeigt eine schematische Darstellung eines Fahrzeugs 30 zum Transport von Fahrgästen.

Das Fahrzeug 30 weist eine Sitzbaugruppe 20 mit dem Personensicherungssystem 1 auf. Ferner weist das Fahrzeug ein Retraktor-Rückhaltesystem 31 auf, welches die Schlosszunge 11 umfasst. Die Schlosszunge 11 des Retraktor-Rückhaltesystems 31 ist mit dem korrespondierenden Gurtschloss 7 des Personensicherungssystems 1 in Eingriff bringbar, um einen Fahrgast an dem Sitz zu sichern bzw. zu fixieren.

Das Fahrzeug 20 umfasst ferner eine Kopplungsschnittstelle 37, die mit der korrespondierenden Schnellkopplungseinrichtung 25 des Fahrzeugsitzes 21 der Sitzbaugruppe 20 koppelbar ist. Weiterhin weist das Fahrzeug 30 eine zentrale Fahrzeugsteuerung 33 auf und eine Fahrzeugbatterie 35, die signalleitend mit der zentralen Fahrzeugsteuerung 33 verbunden ist. Die Fahrzeugbatterie 35 ist dazu eingerichtet, die zentrale Stromversorgung für das Fahrzeug 30 bereitzustellen.

Der Energiespeicher 17 der Steuerung 3 ist dabei ein autonomer Energiespeicher, der von der Fahrzeugbatterie 35 elektrisch entkoppelt ist.

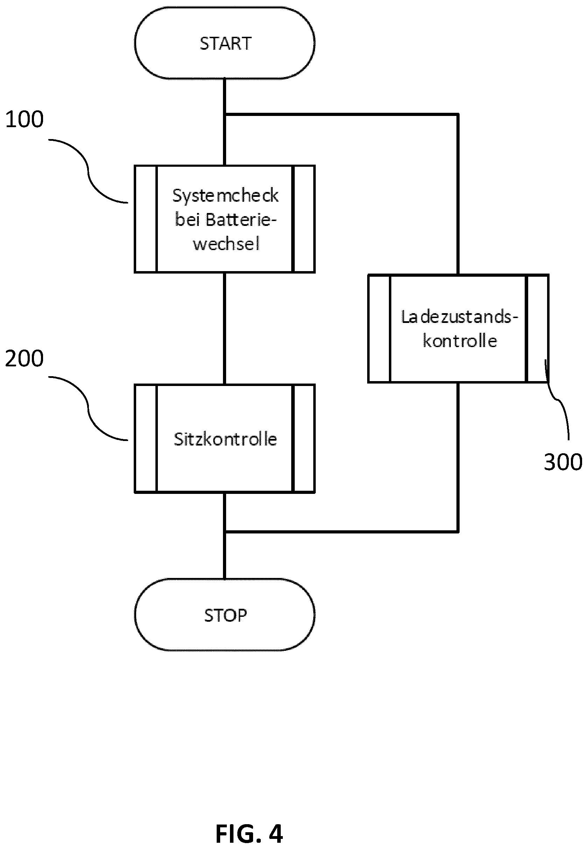

Figur 4 zeigt in einem schematischen Fließbild die Funktionsweise der Steuerung 3. Die Steuerung 3 ist dazu eingerichtet, nach einem Aufladen oder Austausch des Energiespeichers 17 vor einem Verfahren zur Personensicherung 200 Verfahrensschritte zur Funktionsprüfung 100 durchzuführen. Parallel zu den Verfahrensschritten zur Personensicherung 200 und ggf. Verfahrensschritten zur Funktionsprüfung 100 ist die Steuerung 3 dazu eingerichtet Verfahrensschritte zur Überprüfung des Ladezustands des Energiespeichers 300 durchzuführen.

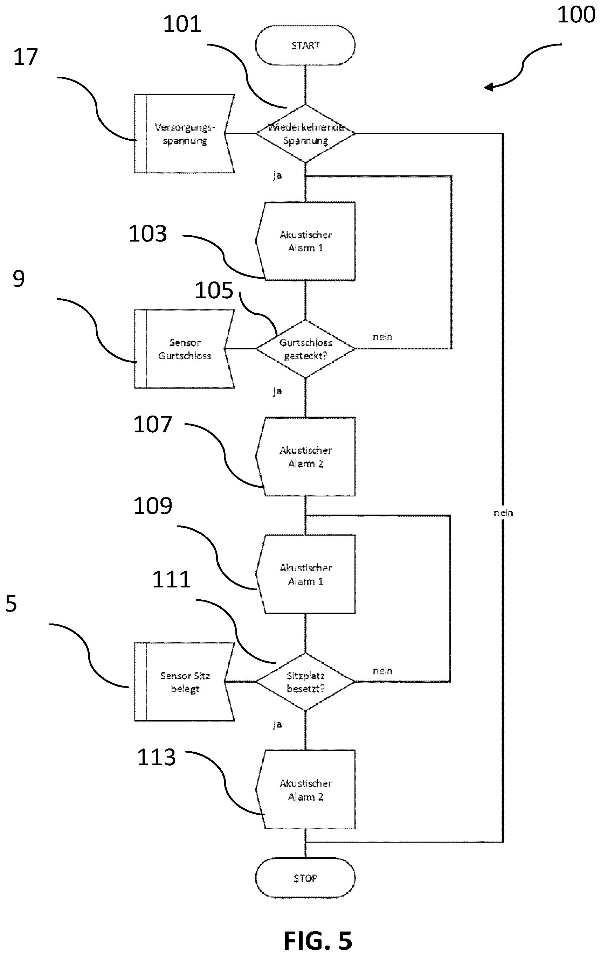

Die Verfahrensschritte zur Funktionsprüfung 100 des Personensicherungssystems 1 (vgl. Figur 1) sind in Figur 5 in einem schematischen Fließdiagramm dargestellt. Die Verfahrensschritte umfassen die Prüfung, ob eine wiederkehrende Spannung, insbesondere Versorgungsspannung, die durch den Energiespeicher 17 bereitgestellt wird, vorliegt.

Liegt keine Spannung an, so werden die weiteren Verfahrensschritte zur Funktionsprüfung 100 des Personensicherungssystems 1 nicht durchgeführt.

Wird in einem Verfahrensschritt 101 eine wiederkehrende Spannung erfasst, wird in einem Verfahrensschritt 103 ein erster Alarm, vorzugsweise ein akustischer Alarm durch ein von der Steuerung 3 bereitgestelltes Alarmsignal erzeugt. In einem Verfahrensschritt 105 wird mittels des Gurtschlossdetektors 9 erfasst, ob das Gurtschloss 7 mit der Schlosszunge 11 in Eingriff ist. In einem Fall, in dem das Gurtschloss 7 nicht mit der Schlosszunge 11 in Eingriff ist, wird erneut der Verfahrensschritt 103 durchgeführt und ein Alarm erzeugt. Anschließend wird erneut der Verfahrensschritt 105 durchgeführt.

In Fällen in denen das Gurtschloss 7 mit der Schlosszunge 11 in Eingriff ist, wird in einem Verfahrensschritt 107 ein zweiter Alarm erzeugt, der von dem ersten Alarm verschieden ist. Anschließend wird in einem Verfahrensschritt 109 erneut der erste Alarm erzeugt, sodass in den Verfahrensschritten 107 und 109 eine Abfolge des zweiten Alarms und des ersten Alarms erfolgt, die anzeigt, dass das Gurtschloss 7 mit der Schlosszunge 11 in Eingriff ist.

In einem Verfahrensschritt 111 wird mittels des Sitzdetektors 5 überprüft, ob der Sitzplatz belegt ist. Ist der Sitzplatz nicht belegt, erfolgt der Verfahrensschritt 109 erneut und der erste Alarm wird nochmals erzeugt. Anschließend wird der Verfahrensschritt 111 wiederholt.

In Fällen, in denen eine Sitzplatzbelegung in dem Verfahrensschritt 111 erfasst wird, erfolgt eine nochmalige Erzeugung des zweiten Alarms in dem Verfahrensschritt 113.

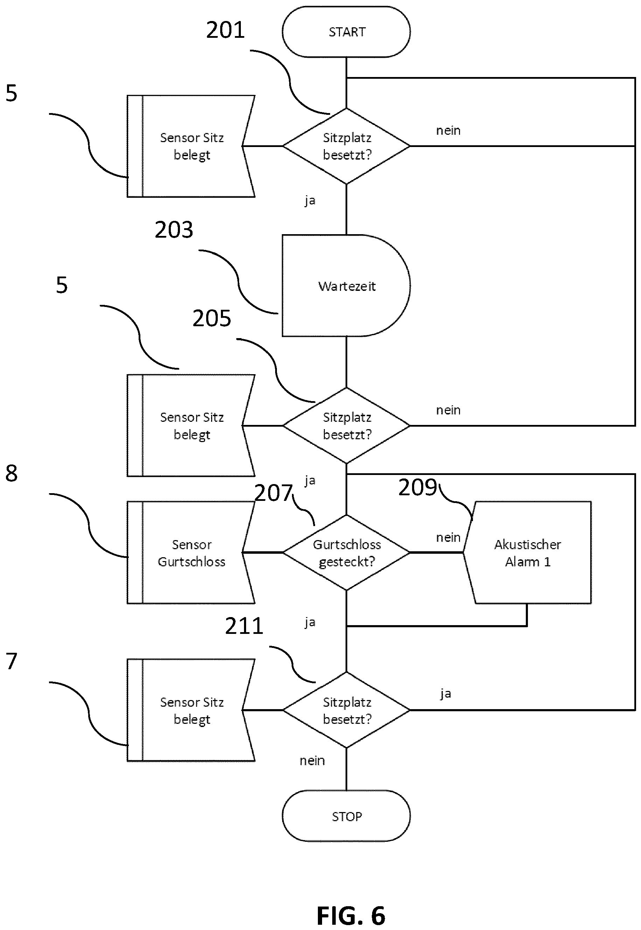

Nach den Verfahrensschritten gemäß Figur 5 oder im laufenden Betrieb erfolgen die in Figur 6 gezeigten Verfahrensschritte 200 zur Sicherung von Personen in Fahrzeugen.

In einem Verfahrensschritt 201 wird mittels des Sitzplatzdetektors 5 die Sitzplatzbelegung überprüft. Der Verfahrensschritt 201 wird dabei solange wiederholt, bis eine Sitzplatzbelegung erfasst wird. Anschließend wird in einem Verfahrensschritt 203 der Ablauf einer Verzögerungszeit abgewartet, die bevorzugt mittels einer Verzögerungsschaltung der Steuerung 3 des Personensicherungssystems 1 gemäß Figur 1 vorgegeben werden kann.

Nach Ablauf dieser Verzögerungszeit wird nochmals von dem Sitzdetektor 5 erfasst, ob der Sitzplatz auch weiterhin belegt ist. Ist dieser nicht belegt, so wird Verfahrensschritt 201 wiederholt. Ist der Sitzplatz belegt, folgt Verfahrensschritt 207, in welchem mittels des Gurtschlossdetektors 9 geprüft wird, ob das Gurtschloss 7 mit der Schlosszunge 11 in Eingriff ist. Ist das Gurtschloss 7 von der Schlosszunge 11 getrennt, wird von der Steuerung 3 ein erstes Alarmsignal an ein Alarmmittel 16 (vgl. Figur 1) bereitgestellt, welches dann einen ersten Alarm erzeugt.

Anschließend wird der Verfahrensschritt 207 wiederholt, bis der Gurtschlossdetektor erfasst, dass das Gurtschloss 7 mit der Schlosszunge 11 in Eingriff ist.

Nachfolgend wird Verfahrensschritt 209 durchgeführt, in dem mittels des Sitzdetektors 5 erneut erfasst wird, ob der Sitzplatz auch weiterhin belegt ist. Ist dies der Fall, so wird Verfahrensschritt 207 wiederholt und ggf. in Verfahrensschritt 209 erneut der erste Alarm erzeugt. Ist der Sitzplatz nicht mehr besetzt, so wird das Verfahren 200 abgebrochen.

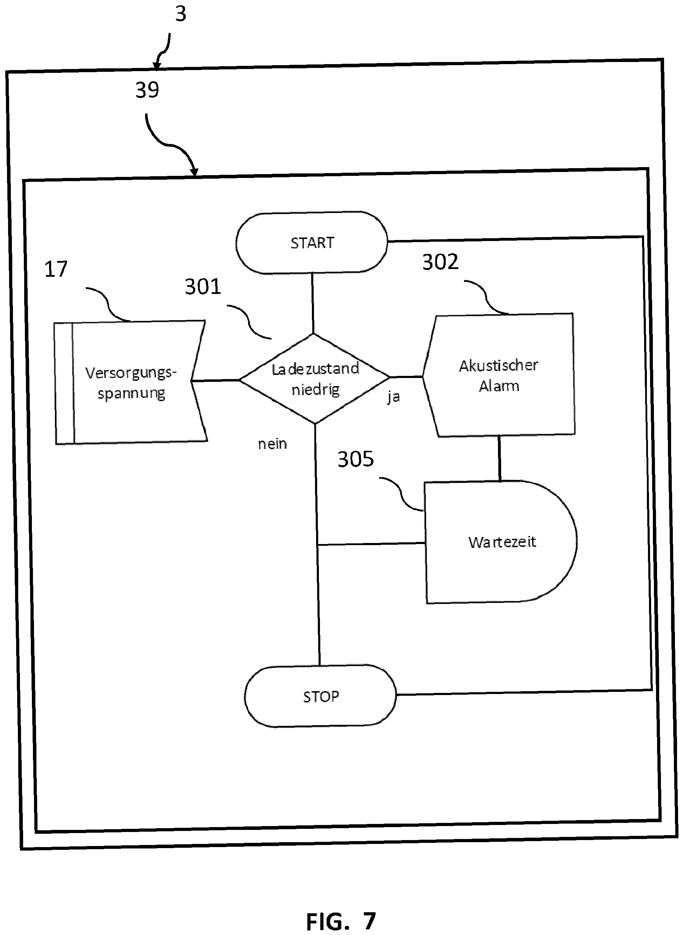

Figur 7 zeigt die Verfahrensschritte zur Überprüfung des Ladezustands 300, wobei die Steuerung 3 dazu eine Ladzustands-Überwachungseinheit 39 aufweist. Die Ladezustands-Überwachungseinheit 39 ist dazu eingerichtet in einem Verfahrensschritt 301 den Ladezustand anhand der von dem Energiespeicher 17 (vgl. Figur 1) bereitgestellten Versorgungsspannung und/oder des Versorgungsstroms zu überprüfen. Ist der Ladezustand zu niedrig, wird in einem Verfahrensschritt 303 ein Alarm bereitgestellt. Anschließend wird in einem Verfahrensschritt 305 der Ablauf einer Verzögerungszeit abgewartet und sofern innerhalb dieser Wartezeit das Verfahren unterbrochen und die Energiequelle ausgetauscht, wird das Verfahren abgebrochen. Andernfalls wird die Verfahrensschritte 300 wiederholt, bis der Ladezustand des Energieträgers nicht länger unterhalb eines Mindest-Ladezustands liegt.

### Bezuqszeichenliste

- 1: Personensicherungssystem (1)
- 3: Steuerung
- 5: Sitzdetektor
- 7: Gurtschloss
- 9: Gurtschlossdetektor
- 11: Schlosszunge
- 13: Erregermagnet
- 15: Montageschnittstelle
- 16: Alarmmittel/Alarmeinheit
- 17: Energiespeicher
- 18: erstes Strom-/ oder Signalkabel
- 19: zweites Strom-/ oder Signalkabel
- 20: Sitzbaugruppe
- 21: Fahrzeugsitz
- 23: Sitzflächen
- 25: Schnellkopplungseinrichtung
- 30: Fahrzeug
- 31: Rückhaltesystem
- 33: zentrale Fahrzugsteuerung
- 35: Fahrzeugbatterie
- 37: Kopplungsschnittstelle
- 39: Ladezustands-Überwachungseinheit
- 40: Sendeeinheit
- 41: Empfängereinheit
- 42: Signalverarbeitungseinheit
- 43: Anzeigeeinheit

## Patentansprüche

1. Personensicherungssystem (1) zur Sicherung von Personen in Fahrzeugen mit reversibel montierten Fahrzeugsitzen, mit
- einem Sitzdetektor (5), der in die Sitzfläche eines Fahrzeugsitzes (21) einbringbar und dazu eingerichtet ist, die Belegung des Fahrzeugsitzes zu überwachen und ein Signal bereitzustellen, wenn der Fahrzeugsitz belegt ist,
- mindestens einem Gurtschloss (7), welches mit dem Fahrzeugsitz verbindbar und dazu eingerichtet ist, mit einer Schlosszunge (11) in Eingriff gebracht zu werden, wobei das Gurtschloss (7) ferner einen Gurtschlossdetektor (9) aufweist, der dazu eingerichtet ist, die Position der Schlosszunge (11) zu überwachen und ein Signal breitzustellen, wenn das Gurtschloss (11) mit der Schlosszunge in Eingriff ist, und
- einer mit dem Fahrzeugsitz verbindbaren Steuerung (3), die signalleitend mit dem Sitzdetektor (5) und dem Gurtschlossdetektor (9) verbunden und dazu eingerichtet ist, die von dem Sitzdetektor (5) und dem Gurtschlossdetektor (9) erfassten Signale zu verarbeiten und ein Alarmsignal bereitzustellen, wenn bei einem belegten Fahrzeugsitz (21) das jeweilige Gurtschloss (7) nicht mit der Schlosszunge (11) in Eingriff ist,
- einem signalleitend mit der Steuerung (3) verbundenen Alarmmittel zum Erzeugen eines Alarms nach Empfang eines Alarmsignals,
wobei die Steuerung (3) einen autonomen, von dem Fahrzeug elektrisch entkoppelten Energiespeicher (17) zum Bereitstellen einer eigenen Stromversorgung für die Steuerung (3), den Sitzdetektor (5), den Gurtschlossdetektor (9) und das Alarmmittel aufweist.

2. Personensicherungssystem (1) nach Anspruch 1,
**dadurch gekennzeichnet, dass** die Steuerung (3) dazu eingerichtet ist, das Alarmsignal erst mit Ablauf einer Verzögerungszeit nach dem Erfassen einer Sitzbelegung an das Alarmmittel (16) bereitzustellen.

3. Personensicherungssystem (1) nach Anspruch 2,
**dadurch gekennzeichnet, dass** die Steuerung (3) eine Verzögerungsschaltung zum Vorgeben der Verzögerungszeit aufweist und der Energiespeicher (17) eine Stromversorgung für die Verzögerungsschaltung bereitstellt.

4. Personensicherungssystem (1) nach einem der vorstehenden Ansprüche,
**dadurch gekennzeichnet, dass** die Steuerung (3) das Alarmmittel (16) aufweist, und das Alarmmittel (16) als ein akustisches und/oder optisches Alarmmittel (16) zur Erzeugung eines Alarmtons und/oder eines optischen Alarms ausgebildet ist.

5. Personensicherungssystem (1) nach einem der vorstehenden Ansprüche,
**dadurch gekennzeichnet, dass** die Steuerung (3) eine Ladestands-Überwachungseinheit aufweist, die stromleitend mit dem Energiespeicher (17) und signalleitend mit dem Alarmmittel (16) verbunden ist,
wobei das Alarmsignal ein erstes Alarmsignal ist, und die Ladestands-Überwachungseinheit ferner dazu eingerichtet ist, ein zweites Alarmsignal an das Alarmmittel (16) bereitzustellen, wenn ein vordefinierter Mindest-Ladestand unterschritten wird.

6. Personensicherungssystem (1) nach einem der vorstehenden Ansprüche,
**dadurch gekennzeichnet, dass** die Steuerung (3) jeweils mittels einer Stromleitung und einer Signalleitung mit dem Sitzdetektor (5), dem Gurtschlossdetektor (9) und vorzugsweise dem Alarmmittel (16) verbunden ist.

7. Personensicherungssystem (1) nach einem der vorstehenden Ansprüche,
**dadurch gekennzeichnet, dass** der Gurtschlossdetektor (9) einen Hall-Sensor und einen Magneten, insbesondere Permanentmagneten, aufweist, wobei der Hall-Sensor dazu eingerichtet ist, eine Lageänderung der Schlosszunge (11) durch Änderung des wirkenden Magnetfelds zu erfassen.

8. Personensicherungssystem (1) nach einem der vorstehenden Ansprüche,
**dadurch gekennzeichnet, dass** das Personensicherungssystem (1) ferner eine Sendeeinheit (40) umfasst, die mit der Steuerung (3) signalleitend, insbesondere kabelgebunden mittels einer Signalleitung, verbunden ist,
wobei die Sendeeinheit (40) mittels einer kabellosen Signalverbindung mit einer Empfängereinheit (41), die einem Fahrzeug (30) zugeordnet ist, verbunden und dazu eingerichtet ist, die von der Steuerung (3) bereitgestellten Signale, insbesondere das Alarmsignal, an die Empfängereinheit (41) zu senden.

9. Personensicherungssystem (1) nach Anspruch 8,
**dadurch gekennzeichnet, dass** die Empfängereinheit (41) signalleitend, insbesondere kabelgebunden mittels einer Signalleitung, mit einer dem Fahrzeug (30) zugeordneten Signalverarbeitungseinheit (42) verbunden ist, wobei die Signalverarbeitungseinheit (42) dazu eingerichtet ist, die von der Sendeeinheit (40) bereitgestellten und von der Empfängereinheit (41) empfangenen Signale zu verarbeiten, um zumindest eine der folgenden Verfahrensschritte durchzuführen:
- Bereitstellen eines ein optisches und/oder akustisches Signals, wenn von der Steuerung (3) ein Alarmsignal bereitgestellt wurde,
- Bereitstellen eines Signals an eine Anzeigeeinheit (43), wobei das Signal Informationen über die von dem Sitzplatzdetektor und/oder von dem Gurtschlossdetektor erfassten Signale enthält,
- Bereitstellen eines Signals an eine zentrale Fahrzeugsteuerung (33), wobei das Signal Informationen über die von dem Sitzplatzdetektor und/oder von dem Gurtschlossdetektor erfassten Signale enthält.

10. Sitzbaugruppe (20) zur reversiblen Kopplung mit einem Fahrzeug (30), mit
- einem Personensicherungssystem (1) nach einem der vorstehenden Ansprüche,
- einem Fahrzeugsitz (21) mit einer Sitzfläche (23), in die der Sitzdetektor (5) eingebracht ist, und einer Schnellkopplungseinrichtung (25) zur schnellen, reversiblen Kopplung des Fahrzeugsitzes (21) mit dem Fahrzeug (30),
wobei das Gurtschloss (7) mit dem Fahrzeugsitz (21) wirkverbunden und die Steuerung (3) an dem Fahrzeugsitz (21) angeordnet ist.

11. Fahrzeug (30), insbesondere Personenkraftwagen, zum Transport von Fahrgästen, mit
- einer Sitzbaugruppe (20) nach Anspruch 10,
- mindestens einem Retraktor-Rückhaltesystem (31) mit einer Schlosszunge (11), die mit dem korrespondierenden Gurtschloss (7) des Personensicherungssystems (1) in Eingriff bringbar ist,
- mindestens einer Kopplungsschnittstelle (37), welche mit der korrespondierenden Schnellkopplungseinrichtung (25) des Fahrzeugsitzes (21) reversibel koppelbar ist, und
- einer Fahrzeugbatterie (35) zum Bereitstellen einer Stromversorgung für das Fahrzeug (30), wobei der Energiespeicher (17) des Personensicherungssystems (1) ein autonomer Energiespeicher (17) und von der Fahrzeugbatterie (35) elektrisch entkoppelt ist.

12. Verfahren zur Sicherung von Personen in Fahrzeugen (30), umfassend die Schritte
- Bereitstellen einer Sitzbaugruppe (20), insbesondere einer Sitzbaugruppe (20) nach Anspruch 11, mit einem autonomen Energiespeicher (17) als Stromversorgung für eine Steuerung (3), einem Sitzdetektor (5), einem Gurtschlossdetektor (9) und einem Alarmmittel (16),
- Reversibles Montieren des Fahrzeugsitzes (21) mit dem Personensicherungssystem (1) in dem Fahrzeug (30),
- Bereitstellen einer Stromversorgung durch den Energiespeicher (17) für die Steuerung (3), den Gurtschlossdetektor (9), den Sitzdetektor (5) und vorzugsweise des Alarmmittels (16),
- Erfassen der Belegung eines Fahrzeugsitzes (21) mittels eines Sitzdetektors (5),
- Erfassen eine Schließzustand, in dem das Gurtschloss (7) mit einer Schlosszunge (11) in Eingriff ist, mittels eines Gurtschlossdetektors (9),
- Verarbeiten der von dem Sitzdetektor (5) und dem Gurtschlossdetektor (9) erfassten Informationen, insbesondere die eine Steuerung (3) und/oder eine Signalverarbeitungseinheit (42),
- Bereitstellen eines ersten Alarmsignals, wenn bei einem belegten Fahrzeugsitz (21) das zugeordnete Gurtschloss (7) nicht in den Schließzustand gebracht wird,
- Erzeugen eines ersten Alarms nach Empfang des ersten Alarmsignals.

13. Verfahren nach Anspruch 12, ferner die Schritte umfassend:
- Prüfen des Ladezustands des Energiespeichers (17),
- Bereitstellen eines zweiten Alarmsignals, wenn ein vordefinierter Mindest-Ladestand unterschritten wird, und
- Erzeugen eines zweiten Alarms nach Empfang des zweiten Alarmsignals.

14. Verfahren nach Anspruch 12 oder 13, ferner den Schritt umfassend:
- Vorgeben einer Verzögerungszeit mittels einer Verzögerungsschaltung des Personensicherungssystems (1),
wobei das erste Alarmsignal erst mit Ablauf der Verzögerungszeit nach dem Erfassen einer Sitzbelegung bereitgestellt und der erste Alarm erzeugt wird.

15. Verfahren nach Anspruch 14,
wobei das erste Alarmsignal sofort erzeugt wird, wenn nach Ablauf der Verzögerungszeit das Gurtschloss (7) wieder von der Schlosszunge (11) getrennt wird, und weiterhin eine Sitzbelegung erfasst wird.

16. Verfahren nach einem der Ansprüche 12 bis 15, ferner die Schritte umfassend:
- Austausch oder Aufladen des Energiespeichers (17),
- Prüfen der Stromversorgung bzw. der Spannungsversorgung,
- Erzeugen eines ersten Alarmsignals, das dazu eingerichtet ist, dass die Stromversorgung bzw. Spannungsversorgung vorhanden ist,
- Prüfen des Gurtschlossdetektors (9),
- Nochmaliges Erzeugen des ersten Alarmsignals, wenn der Gurtschlossdetektor (9) kein Signal bereitstellt und/oder keinen Eingriff von Gurtschloss (7) und Schlosszunge (11) detektiert, oder
- Erzeugen eines zweiten Alarmsignals und vorzugsweise des zweiten Alarmsignals, wenn der Gurtschlossdetektor (9) ein Signal bereitstellt und/oder einen Eingriff von Gurtschloss (7) und Schlosszunge (11) detektiert,
- Prüfen des Sitzdetektors (5),
- Nochmaliges Erzeugen des ersten Alarmsignals, wenn der Sitzdetektor (5) kein Signal bereitstellt und/oder keine Sitzplatzbelegung detektiert, oder
- Erzeugen eines zweiten Alarmsignals, wenn der Sitzdetektor (5) ein Signal bereitstellt und/oder eine Sitzbelegung detektiert.
